# EUROPÄISCHE PATENTANMELDUNG

(11) **EP 2 397 026 A1**
(43) Veröffentlichungstag der Anmeldung: **21.12.2011**
(21) Anmeldenummer: 10405118.0
(22) Anmeldetag: 20.06.2010
(51) Int. Cl.: A01D 34/84

(54) **Verfahren zur mechanischen Bearbeitung oder Egalisierung einer Randkante**

(71) Anmelder: Ueli Baldinger Gmbh, 5426 Lengnau (CH)
(72) Erfinder: Ueli Baldinger, 5426 Lengnau (CH)
(74) Vertreter: Fenner, Werner

(57) **Zusammenfassung**

Bei einem Verfahren zur mechanischen Bearbeitung oder Egalisierung einer Randkante einer an eine Nutzfläche angrenzenden Gras-, Rasen-, Garten-, Wald oder dgl. Decke wird entlang eines Randbereichs der Decke, eine die Decke durch die Randkante von der Nutzfläche trennende Schneidbewegung ausgeführt.

Hierzu ist an einem Traggestell einer selbstfahrenden Arbeitsmaschine eine entlang der bestimmten Randkante in den Randbereich der Grasdecke etc. (5) eintauchende, in einem spitzen Winkel zu einer Fortbewegungsrichtung (F) angestellte, rotierend angetriebene, etwa kreisrunde Trennscheibe (6) befestigt.

## Beschreibung

Die Erfindung betrifft ein Verfahren zur mechanischen Bearbeitung oder Egalisierung einer Randkante einer an eine Nutzfläche oder dgl. angrenzenden Gras-, Rasen-, Garten-, Wald oder dgl. Decke.

Decken oder Oberböden der genannten Art sind von Zeit zu Zeit resp. periodisch gegenüber Nutzflächen wie Fahr- und Gehwege, Pisten, Plätze, Einrichtungen in Golf- oder Parkanlagen abzustechen resp. zurückzunehmen. Dies geschieht auf übliche Weise durch erfahrenes Personal mittels Hacke, Spaten, Schaufel oder dgl. Werkzeuge, sei es bei Bunkern (Sandhindernissen) in Golfanlagen, die in einer Saison mehrmals in langwieriger Arbeit nach aussen abzustechen sind, oder an Fahr- und Gehwegrändern, kurz überall dort, wo der angrenzende Oberboden sich auf eine Nutzfläche ausdehnt.

Danach ist die abgestochene, teilweise lose Grasnarbe aufzunehmen und wegzutragen. Als Grasnarbe wird der Bewuchs des Bodens, Oberbodens oder der Decke durch Gräser und/oder Kräuter bezeichnet, der durch einen Pflanzenbestand und Wurzeln einen Zusammenhalt bekommt. Verwandte Bezeichnungen der Grasnarbe sind Gras- und Rasendecke, Heidenarbe etc.

Auch Fahrbahnen und Gehwege werden in mühsamer Handarbeit mit Schaufel, Spaten, Pickel, Hacke und dgl. an den Seitenrändern von überwachsenem Boden befreit.

Von diesem natürlichen Ereignis sind auch Blumenbeete in Parkanlagen betroffen. Selbstverständlich tritt dieses Problem auch bei verlegter Grassode auf, die u.a. für Sportrasenflächen verwendet wird.

Aufgabe der vorliegenden Erfindung ist es, ein Verfahren nach der eingangs beschriebenen Art zu schaffen, mit dem auf eine weniger anstrengende Art, innert kürzerer Zeit und mit geringerem manuellen Aufwand eine Randkante eines Randbereichs eines Oberbodens oder einer eine Nutzfläche überwachsenden Decke mechanisch erstellt, egalisiert oder zurückversetzt werden kann.

Erfindungsgemäss wird diese Aufgabe durch eine entlang eines Randbereichs der Decke geführte, die Decke durch die Randkante von der Nutzfläche trennende Schneidbewegung gelöst. Auf diese Art kann eine sauber gezogene Randkante errichtet werden.

Diese Vorgehensweise kann durch ein eine Schneidbewegung ausübendes, an einer selbstfahrend angetriebenen Arbeitsmaschine befestigtes Gerät oder eine entsprechende Einrichtung vorgenommen werden.

Vorteilhaft übt die Schneidbewegung eine auf einen von der Decke abgetrennten Deckenrand seitliche Förderbewegung aus.

Vorzugsweise wird die Schneidbewegung durch eine auf die Decke einwirkende Kraft ausgeübt, beispielsweise infolge der Gravitation.

Vorteilhaft wird die auf die Decke einwirkende Schneidbewegung durch eine rotierende, vorzugsweise ununterbrochene Schneidkante ausgeübt.

Die Schneidbewegung kann im Schneidbereich gegen eine Fortbewegungsrichtung erfolgen, sodass das losgelöste Deckematerial gefördert werden kann.

Hierzu kann die Schneidkante im Schneidbereich spitzwinklig zur vorgesehenen Randkante ausgerichtet sein, wobei dieser Winkel vorzugsweise einstell-und verstellbar ist.

Dabei kann die Geschwindigkeit der Schneidkante grösser als die Fortbewegungsgeschwindigkeit sein, sodass weniger Reaktionskräfte an der Schneidkante auftreten.

Zweckmässig ist die Schneidkante so ausgerichtet, dass auf einer Seite letzterer resp. abgewandt von der Randkante eine Förderwirkung auf das abgetrennte Deckematerial eintritt.

Es stellt sich an die Erfindung die weitere Aufgabe, eine Einrichtung zu schaffen, mit der auf einfache Art und geringerem Zeitaufwand als manuell durch eine mechanische Bearbeitung oder Egalisierung eines Randbereichs einer Gras-, Rasen- oder dgl. Decke eine gegenüber einer Nutzfläche gleichmässige Randkante erstellt werden kann.

Erfindungsgemäss wird die Aufgabe dadurch gelöst, dass an einem Traggestell einer selbstfahrenden Arbeitsmaschine eine entlang der bestimmten Randkante in den Randbereich der Grasdecke etc. eintauchende, in einem spitzen Winkel zu einer Fortbewegungsrichtung angestellte, rotierend angetriebene, etwa kreisrunde Trennscheibe befestigt ist.

Selbstverständlich könnte die Einrichtung eine weitere Trennscheibe schräg versetzt zur ersten Trennscheibe aufweisen, so dass ein breiterer Rand von der Decke in einem Durchgang abgelöst werden kann.

Vorteilhaft weist die Trennscheibe wenigsten einen von der Randkante weg abgebogenen Randbereich auf, der eine geringe Förderwirkung auf das abgetrennte Deckematerial ausübt.

Vorzugsweise ist die Trennscheibe mit einer der Randkante zugewandten konvexen Oberfläche ausgebildet, die das Schneiden resp. ein Abschälen sowie Trennen des abzutragenden Deckematerials von der verbleibenden Decke weiter begünstigt und die der Stabilität und Steifigkeit der Trennscheibe zuträglich ist.

Diese vorteilhaften Eigenschaften werden nicht verändert, wenn die Trennscheibe auf der der Randkante der Decke abgewandten Seite konkav ausgebildet ist, so dass sie beispielsweise aus einem Stahlblech oder dgl. herstellbar resp. formbar ist. Durch die gewölbte Form der Trennscheibe wird auf das von der verbleibenden Decke abgetrennte Oberbodengut eine seitlich nach hinten gerichtete Förderwirkung ausgeübt.

Die Trennwirkung kann durch eine Schneidkante am Umfang begünstigt werden, indem eine geringere Schneidkraft notwendig ist.

Zur Anpassung an die Höhe der Randkante oder zur Einstellung an die Randkantenhöhe und deren Ausrichtung ist die Trennscheibe an der Arbeitsmaschine höhenverstellbar und seitenverstellbar angeordnet.

Auch der spitzwinklige Anstellwinkel der Trennscheibe zur Fortbewegungsrichtung oder zur Randkanteerstreckung der Decke kann eingestellt und verstellt werden. Diese Möglichkeit gestattet eine Anpassung der Einrichtung an die Verhältnisse des zu bearbeitenden Oberbodens.

Vorteilhaft ist der Trennscheibe eine in Fortbewegungsrichtung der Einrichtung sich entgegengesetzt erstreckende, ansteigende Fördervorrichtung nachgeschaltet, die das über der Nutzfläche von der Trennscheibe im Randbereich der Decke losgelöste Oberbodenmaterial wegtransportiert, zweckmässigerweise in einen entleerbaren Aufnahmebehälter, der an der Rückseite der Einrichtung angeordnet ist.

Trennscheibe und Fördervorrichtung bilden vorzugsweise eine Einheit und sind an einem Anbaubock der Arbeitsmaschine höhenverstellbar angeordnet. Die Einheit kann von der Arbeitsmaschine demontiert werden.

Aufgrund der unterschiedlichen oder sich verändernden abzutrennenden Randbreite und -dicke einer Decke ist es zweckmässig, wenn die Trennscheibe mit einer anderen Schneid- oder Umfangsgeschwindigkeit als die Fördergeschwindigkeit der Fördervorrichtung betrieben werden kann, d.h. schneller oder langsamer.

Hierzu kann der Antrieb der Trennscheibe und der Fördervorrichtung resp. des Förderorgans mit unabhängig voneinander gesteuerten Motoren versehen sein.

Die Fördervorrichtung weist vorteilhaft an dem stromaufwärts gerichteten Ende ein näherungsweise an die Oberfläche der Nutzfläche reichendes Leitelement für das von der Trennscheibe zugeführte Deckegut auf, wobei das Leitelement mit einem nachfolgenden Förderorgan förderwirksam verbunden ist, welches aus quer zur Förderrichtung des Deckeguts in Abständen hintereinander um beabstandete Achsen umlaufende Förderstäbe besteht.

Vorteilhaft ist die Trennscheibe seitlich einer lenkbaren Achse resp. Vorderachse einer Arbeitsmaschine angeordnet, sodass eine Auswirkung der Lenkung oder Führung auf die Einrichtung entstehen kann.

Nachfolgend wird die Erfindung unter Bezugnahme auf den zitierten resp. den zitierenden Stand der Technik und die Zeichnung, auf die bezüglich aller in der Beschreibung nicht näher erwähnten Einzelheiten verwiesen wird, anhand eines Ausführungsbeispiels erläutert. In der Zeichnung zeigen:
- Fig. 1: eine Ausführung nach der erfindungsgemässen Einrichtung in räumlicher Darstellung,
- Fig. 2: eine auszugsweise Draufsicht auf die Ausführung der in Fig. 1 dargestellten Einrichtung,
- Fig. 3: eine Ansicht der in Fig. 2 auszugsweise gezeigten Ausführung der in Fig. 1 dargestellten Einrichtung,
- Fig. 4: eine schematische Darstellung einer Ausführung der Einrichtung an einer selbstfahrenden Arbeitsmaschine,
- Fig. 5: eine Ansicht einer alternativen Ausführung der Einrichtung entgegen der Fortbewegungsrichtung und
- Fig. 6: eine Draufsicht auf die in Fig. 6 gezeigte Ausführung.

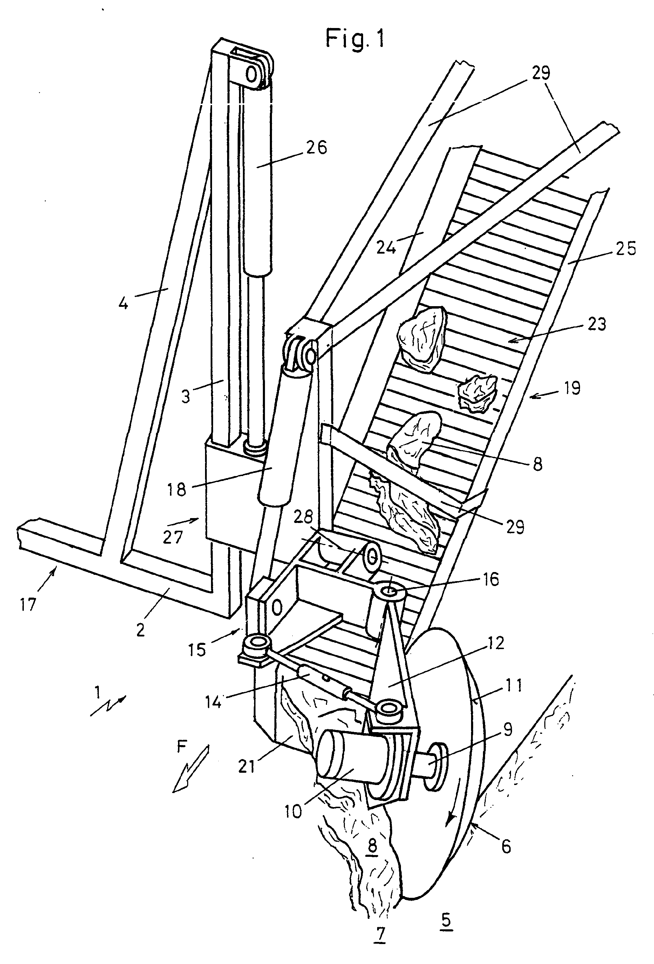

Fig. 1 vermittelt eine Ausführungsform der erfindungsgemässen Einrichtung 1, die vorzugsweise an eine zweiachsige Arbeitsmaschine (in Fig. 1 nicht dargestellt) seitlich anbaubar und demontierbar ist. Hierzu ist ein an der Unterseite der Arbeitsmaschine oder eines Traktors mit dessen Fahrgestell verbundener Träger 2 vorgesehen, auf dem die Einrichtung 1 an einem stehenden Führungselement 3 abgestützt ist. Eine seitliche Strebe 4 verbindet den Träger 3 am oberen Ende, sodass ein Anbaubock 17 gebildet wird. Die Bearbeitung oder Egalisierung einer Randkante eines an eine Nutzfläche, beispielsweise einen Bunker einer Golfanlage, eine Fahrbahn, einen Gehweg, Platz oder dgl. angrenzenden/anstossenden Randbereichs einer Gras-, Rasen-, Garten- oder Walddecke erfolgt durch eine entlang des Randbereichs der Decke in diese eintauchend geführte, überstehendes Deckegut durch eine zu bildende Randkante von der Nutzfläche zu trennende Schneidbewegung. D.h., dass die Nutzfläche von einem Teil des erstere überwachsenden Randbereichs der Decke 5 befreit wird.

Die Schneidbewegung erfolgt durch eine auf die Decke einwirkende Kraft, vorzugsweise durch die von einer Arbeitsmaschine und der Einrichtung 1 erzeugte Gravitationskraft.

Die Schneidbewegung durch die Decke wird durch eine rotierende, vorzugsweise ununterbrochene Schneidkante eines Schneidwerkzeuges ausgeübt.

Die kontinuierliche Schneidbewegung erfolgt im Schneidbereich gegen eine Fortbewegungsrichtung des Schneidvorgangs und kann so einen auf ein eine Nutzfläche überdeckendes Deckematerial einen abschälenden Effekt auslösen.

Die Schneidbewegung der Schneidkante kann die grössere Geschwindigkeit aufweisen als die Fortbewegungsgeschwindigkeit einer vorgesehenen Einrichtung.

Die Schneidkante des Schneidwerkzeuges ist im Schneidbereich spitzwinklig zu dem entlang des zu bearbeitenden Randbereichs der Decke vorgesehenen Verlauf der Randkante ausgerichtet.

Die Einrichtung 1 weist eine vorzugsweise kreisrunde Trennscheibe 6 auf, die bei der Bearbeitung eines Randbereichs 7 in diesen soweit eindringt, dass zumindest das auf der Nutzfläche vorkommende Deckegut 8 von der Decke 5 abgetrennt und zur Seite verschoben wird.

Zu diesem Zweck ist die vorzugsweise aus Stahl gefertigte Trennscheibe 6 an einer Antriebswelle 9 befestigt, die von einem Motor, beispielsweise einem Hydraulikmotor 10 angetrieben ist.

Zur Begünstigung der Schneid- und Förderwirkung durch die Trennscheibe 6 weist diese einen von der Randkante weg betrachtet abgebogenen resp. gekrümmten Umfangsrandbereich 11 auf, der beispielweise zu einer bombierten Oberfläche der Trennscheibe 6 gehört, die vorzugsweise eine der Randkante zugewandte konvexe Form aufweist.

Der die Trennscheibe 6 antreibende Hydraulikmotor 10 ist mit nicht ersichtlichen Hydraulikschläuchen eines hydrostatischen Antriebssystem verbunden, das hier aufgrund seiner verbreiteten Bekanntheit nicht beschrieben und nicht dargestellt ist. Der Motor 10 ist an einem freien Ende eines Supports 12 befestigt, der als Schwenkarm ausgebildet ist, so dass der Abstand der Trennscheibe 6 von der Arbeitsmaschine resp. gegenüber dem Randbereich der Decke 5 oder einer noch zu beschreibenden Fördervorrichtung 19 verstellbar ist, wozu ein hinsichtlich Länge verstellbarer Lenker 14 mit Links- und Rechtsgewinde vorgesehen ist. Der Schwenkarm 12 ist an einem mit dem Anbaubock 17 schwenkbar verbundenen Schwenkbock 15 um eine schrägstehende Achse 16 schwenkbar angeordnet, um die Lage der Trennscheibe 6 , insbesondere zur Bearbeitung oder Egalisierung der überstehenden Decke 5 in eine geeignete Betriebsposition stellen zu können. Anstelle des verstellbaren Lenkers 14, mit dem die Trennscheibe 6 hinsichtlich Stellung noch korrigiert werden kann, könnte auch eine hydraulische Kolben-Zylinder-Einheit verwendet werden, die durch den Bediener der Einrichtung 1 von der Arbeitsmaschine mittels Ventilen betätigt werden kann.

Der Schwenkbock 15 ist um eine etwa horizontale Schwenkachse 28 an dem Anbaubock 27 angelenkt und mit ihm kann die Trennscheibe 6 in eine geeignete Betriebsposition versetzt werden, aus der sie durch eine an dem Anbaubock 27 befestigte Kolben-Zylinder-Einheit 18 auch in eine Ausserbetriebsstellung zurückgenommen resp. angehoben werden kann. Das dem Befestigungsende gegenüberliegende Ende der Kolben-Zylinder-Einheit 18 ist mit dem schwenkbaren Ende des Schwenkbocks 15 verbunden, an dem das vom Motor 10 abgewandte Ende des Lenkers 14 angelenkt ist.

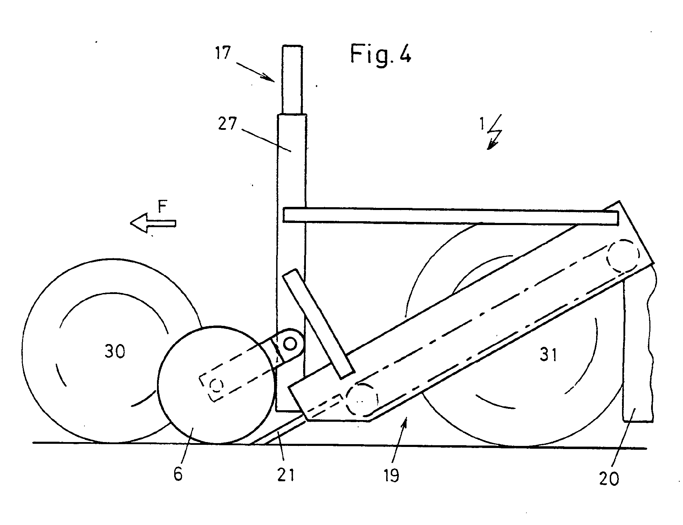

Für das von der Trennscheibe 6 freigelegte Deckegut 8 kann eine der Trennscheibe 6 nachgeschaltete, nach hinten ansteigende Fördervorrichtung 19 vorgesehen sein, die das losgelöste Deckegut 8 erfasst resp. aufnimmt und beispielsweise in einen Aufnahmebehälter 20 am rückwärtigen Ende der Einrichtung 1 transportiert (siehe Fig. 4).

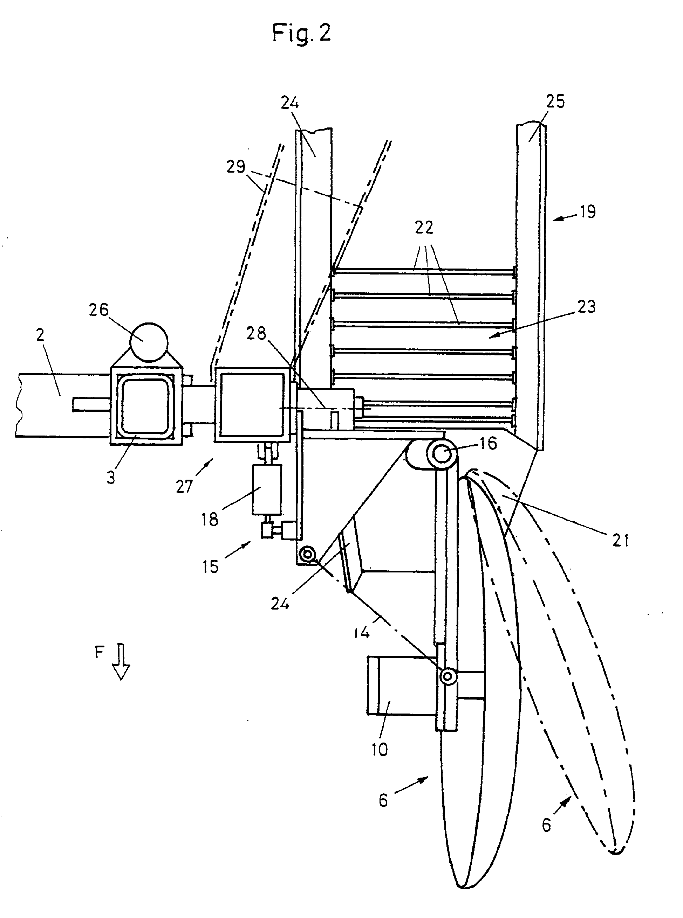

Durch die von der in der Betriebsstellung schräggestellten (spitzwinklig zur Randkante) Trennscheibe 6 und die entlang des Randbereichs 7 der Decke 5 fortbewegten Einrichtung 1 wird das abgeschälte Deckegut 8 über ein Leit- oder Schaufelelement 21 auf ein aus hintereinander beabstandeten Förderstäben 22 gebildetes, umlaufendes Förderorgan 23 geführt. Siehe auch Fig. 2, in der die Betriebsposition der Trennscheibe 6 strichpunktiert dargestellt ist.

Selbstverständlich könnte bei der Fördervorrichtung 19 auch ein Förderorgan mit einem Transportband verwendet werden.

Beidseits des Förderorgans 23 sind dieses seitlich begrenzende und bis an das vordere Ende der Fördervorrichtung 19 reichende Seitenwände 24, 25 angeordnet. Trennscheibe 6 und Fördervorrichtung 19 bilden bei dem in den Fig. 1 bis 3 veranschaulichten Ausführungsbeispiel eine Maschinen- resp. Geräteeinheit, die an dem Führungselement 3 des Anbaubocks 17 höhenverstellbar ist. Hierzu ist ein mittels Kolben-Zylinder-Einheit 26 an dem Führungselement 3 absenk- und anhebbarer Hebebock 27 vorgesehen, an dem die Trennscheibe 6 über ein Schwenklager der Schwenkachse 28 des Schwenkbocks 15 und der Kolben-Zylinder-Einheit 18 sowie die Fördervorrichtung 19 durch die Verbindungsstäbe 29 gehalten sind.

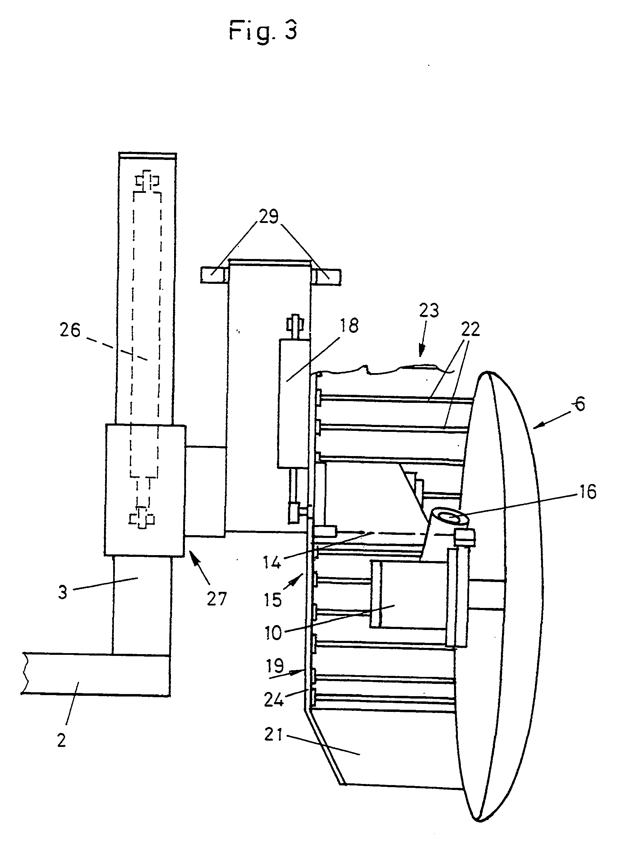

Die Fig. 2 und 3 lassen den gebogenen resp. gekrümmten Umfangsbereich der Trennscheibe 6 erkennen, die eine bombierte Oberfläche aufweist.

Fig. 4 zeigt in einer schematischen Seitenansicht ein Vorderrad 30 und ein Hinterrad 31 einer zweiachsigen, selbstfahrenden Arbeitsmaschine, an deren Seite die Einrichtung 1 befestigt ist, wobei Pfeil F die Fortbewegungsrichtung zur Bearbeitung der Decke 5 anzeigt.

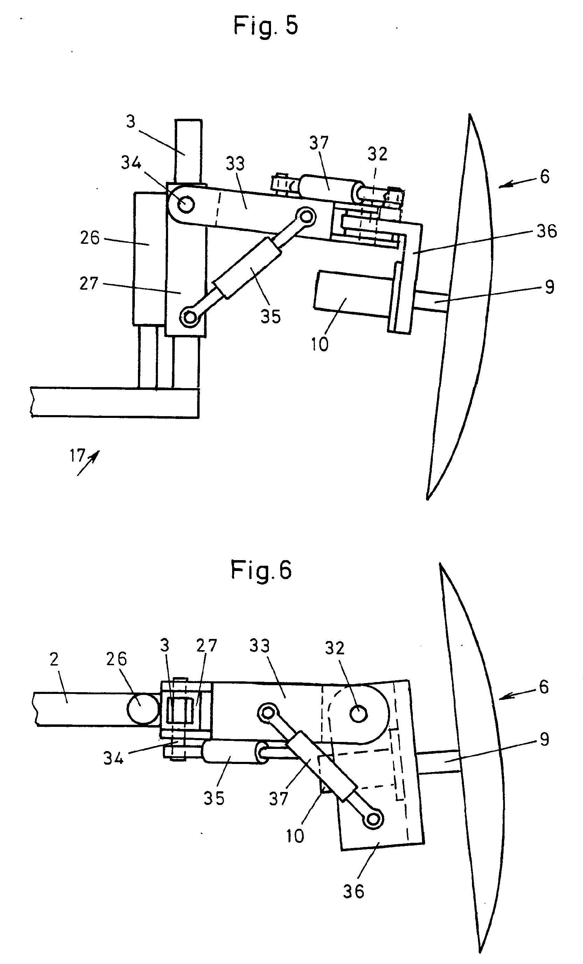

Die Fig. 5 und 6 zeigen eine alternative Ausführungsform der Einrichtung 1, mit der die Trennscheibe 6 an dem Anbaubock 17 einer Arbeitsmaschine höhenverstellbar, in eine Neigungslage und um eine in eine Neigungslage verstellbare Achse 32 schwenkbar ist. Zu diesem Zweck ist an dem an dem Führungselement 3 höhenverstellbaren Hebebock 27 ein Ausleger 33 mittels Hubzylinder 35 um eine horizontale Achse 34 schwenkbar befestigt. Der Ausleger wiederum trägt am freien Ende einen die Trennscheibe 6 und Motor 10 der Trennscheibe 6 aufnehmenden Support 36, der um die neigbare Achse 32 schwenkbar ist, wozu eine an dem Ausleger 33 befestigte Kolben-Zylinder-Einheit 37 vorgesehen ist. Die Kolben-Zylinder- Einheiten 26, 35 und 37 sind vorzugweise separat ansteuerbar, sodass die verschiedenen Bewegungen zur Verstellung der Trennscheibe 6 unabhängig voneinander ausführbar sind.

## Patentansprüche

1. Verfahren zur mechanischen Bearbeitung oder Egalisierung einer Randkante einer an eine Nutzfläche angrenzenden Gras-, Rasen-, Garten-, Wald- oder dgl. decke, **gekennzeichnet durch** eine entlang eines Randbereichs der Decke geführte, die Decke **durch** die Randkante von der Nutzfläche trennende Schneidbewegung.

2. Verfahren nach Anspruch 1, **dadurch gekennzeichnet, dass** die Schneidbewegung eine auf einen von der Decke abgetrennten Deckenrand seitliche Förderbewegung ausübt.

3. Verfahren nach Anspruch 1 oder 2, **dadurch gekennzeichnet, dass** die Schneidbewegung durch eine auf die Decke einwirkende ausgeübte Kraft erfolgt.

4. Verfahren nach einem der Ansprüche 1 bis 3, **dadurch gekennzeichnet, dass** die auf die Decke einwirkende Schneidbewegung durch eine rotierende, vorzugsweise ununterbrochene Schneidkante ausgeübt wird.

5. Verfahren nach einem der Ansprüche 1 bis 4, **dadurch gekennzeichnet, dass** die Schneidbewegung im Schneidbereich gegen eine Fortbewegungsrichtung erfolgt.

6. Verfahren nach Anspruch 5, **dadurch gekennzeichnet, dass** die Schneidgeschwindigkeit der Schneidkante grösser als die Fortbewegungsgeschwindigkeit ist.

7. Verfahren nach einem der Ansprüche 4 bis 6, **dadurch gekennzeichnet, dass** die Schneidkante im Schneidbereich spitzwinklig zur Randkante ausgerichtet ist.

8. Einrichtung zur mechanischen Bearbeitung oder Egalisierung einer Randkante einer an eine Nutzfläche angrenzenden Gras-, Rasen-, Garten-, Wald- oder dgl. Decke (5), **dadurch gekennzeichnet, dass** an einem Traggestell einer selbstfahrenden Arbeitsmaschine eine entlang der vorgesehenen Randkante in den Randbereich der Grasdecke etc. (5) eingetauchte, in einem spitzen Winkel zu einer Fortbewegungsrichtung (F) angestellte, rotierend angetriebene, etwa kreisrunde Trennscheibe (6) befestigt ist.

9. Einrichtung nach Anspruch 8, **dadurch gekennzeichnet, dass** die Trennscheibe (6) einen von der Randkante der Decke (5) weg betrachtet gebogenen resp. gekrümmten Umfangsrandbereich aufweist.

10. Einrichtung nach Anspruch 8 oder 9, **dadurch gekennzeichnet, dass** die Trennscheibe (6) eine bombierte, der Randkante konvex zugewandte Oberfläche aufweist.

11. Einrichtung nach einem der Ansprüche 8 bis 10, **dadurch gekennzeichnet, dass** die Trennscheibe (6) eine von der Randkante der Decke (5) abgewandte konkave Oberfläche aufweist.

12. Einrichtung nach einem der Ansprüche 8 bis 11, **dadurch gekennzeichnet, dass** der Umfang der Trennscheibe (6) als Schneidkante ausgebildet ist.

13. Einrichtung nach einem der Ansprüche 8 bis 12, **dadurch gekennzeichnet, dass** die Trennscheibe (6) höhen- und seitenverstellbar an der Arbeitsmaschine angeordnet ist.

14. Einrichtung nach einem der Ansprüche 8 bis 13, **dadurch gekennzeichnet, dass** der spitze Anstellwinkel der Trennscheibe (6) zur Fortbewegungsrichtung (F) oder zur Randkante einstell- und verstellbar ist.

15. Einrichtung nach einem der Ansprüche 8 bis 14, **dadurch gekennzeichnet, dass** der Trennscheibe (6) eine sich zur Fortbewegungsrichtung (F) entgegengesetzt erstreckende, ansteigende Fördervorrichtung (19) nachgeschaltet ist.

16. Einrichtung nach Anspruch 15, **dadurch gekennzeichnet, dass** Trennscheibe (6) und Fördervorrichtung (19) als Einheit ausgebildet an einem mit dem Fahrgestell der Arbeitsmaschine verbundenen Anbaubock (17) höhenverstellbar angeordnet sind.

17. Einrichtung nach Anspruch 15 oder 16, **dadurch gekennzeichnet, dass** die Trennscheibe (6) bezüglich Umfangsgeschwindigkeit unabhängig von der Fördergeschwindigkeit der Fördervorrichtung (19) einstell- und verstellbar ist.

18. Einrichtung nach einem der Ansprüche 15 bis 17, **dadurch gekennzeichnet, dass** die Fördervorrichtung (19) an dem stromaufwärts gerichteten Ende ein näherungsweise an die Nutzfläche reichendes Leitelement (21) für das von der Trennscheibe (6) zugeführte Deckegut (8) aufweist, an welches ein aus quer zur Förderrichtung des Deckeguts (8) in Abständen hintereinander verlaufende, um beabstandete Achsen umlaufende Förderstäbe (22) aufweisendes Förderorgan (23) anschliesst.

19. Einrichtung nach einem der Ansprüche 14 bis 17, **dadurch gekennzeichnet, dass** der Antrieb der Trennscheibe (6) und der Fördervorrichtung (19) durch separate, gesteuerte Motoren erfolgt.

20. Einrichtung nach einem der Ansprüche 8 bis 19, **dadurch gekennzeichnet, dass** die Trennscheibe (6) etwa im seitlichen Wirkbereich einer lenkbaren Achse der Arbeitsmaschine, vorzugsweise Vorderachse (30) angeordnet ist.
